# EUROPÄISCHE PATENTSCHRIFT

(11) **EP 2 749 443 B1**
(45) Veröffentlichungstag und Bekanntmachung des Hinweises auf die Patenterteilung: **31.05.2017**
(21) Anmeldenummer: 13193246.9
(22) Anmeldetag: 18.11.2013
(51) Int. Cl.: B60K 6/365, B60K 6/445, B60K 6/46, B60K 6/48, F16H 3/72, F16H 37/08

(54) **Hybridantriebsanordnung für ein Kraftfahrzeug**
Hybrid drive assembly for a motor vehicle
Système hybride de propulsion pour véhicule automobile

(30) Priorität: 28.12.2012 DE 102012025368
(43) Veröffentlichungstag der Anmeldung: 02.07.2014
(73) Patentinhaber: Volkswagen Aktiengesellschaft, 38440 Wolfsburg (DE)
(72) Erfinder: Scholz, Norbert, 38106 Braunschweig (DE)

(56) Entgegenhaltungen:
- DE-A1-102004 042 007
- DE-A1-102010 035 209
- DE-B4-112006 002 537
- US-A1- 2012 196 713

## Beschreibung

Die Erfindung bezieht sich auf eine Hybridantriebsanordnung für Kraftfahrzeuge.

Hybridantriebsanordnungen in Form von Mehrbereichsgetrieben sind dem Fachmann in vielfacher Ausgestaltung bekannt. Aus der DE 10 2010 008 763 A1 ist eine Antriebsanordnung mit einer ersten und einer zweiten elektrischen Maschine bekannt, die in Innenläuferbauweise ausgestaltet sind und jeweils einen innenliegenden Rotor und einen äußeren, gehäusefesten Stator aufweisen und sowohl im motorischen als auch im generatorischen Betrieb betreibbar sind. Die beiden elektrischen Maschinen sind über eine Leistungselektronik miteinander verbunden. Über die Leistungselektronik sind die elektrischen Maschinen weiter an einen elektrischen Energiespeicher anschließbar. Eine Eingangswelle des Getriebes ist an eine Verbrennungskraftmaschine anschließbar. Eine Ausgangswelle des Getriebes ist an einen Abtriebsstrang anschließbar, der insbesondere ein Differenzial sowie die Antriebsräder umfassen kann. Die bekannte Anordnung umfasst weiter zwei Planetensätze. Der erste Planetensatz umfasst, wie üblich, eine zentrale Sonne, ein äußeres Hohlrad sowie einen Steg, auf dem wenigstens ein Satz Planeten, die einerseits mit der Sonne und andererseits mit dem Hohlrad kämmen, rotierbar angeordnet sind. Im Rahmen der vorliegenden Anmeldung werden die Begriffe Sonne und Sonnenrad bzw. Planet und Planetenrad synonym verwendet, wobei jeweils das entsprechende funktionale Element mit dem eigentlichen, üblicherweise als Stirnrad ausgebildeten Rad und der zugeordneten Welle gemeint ist. Der zweite Planetensatz weist den gleichen prinzipiellen Aufbau auf.

Bei der bekannten Vorrichtung ist die Sonne des ersten Planetensatzes mit dem Rotor der ersten elektrischen Maschine verbunden, sein Hohlrad ist mit dem Getriebegehäuse verbunden, d.h. an diesem festgelegt, und sein Steg ist mit der Eingangswelle verbunden, deren eingangsseitiger Abschnitt über eine Eingangswellenhauptkupplung von sämtlichen übrigen Elementen der Hybridantriebsanordnung trennbar ist, d.h. mittels der Eingangswellenhauptkupplung ist die Verbrennungskraftmaschine vollständig von der Getriebeanordnung abkoppelbar. Die Sonne des zweiten Planetensatzes ist mit dem Rotor der zweiten elektrischen Maschine verbunden, sein Steg ist mit der Ausgangswelle verbunden und sein Hohlrad ist einerseits über eine erste Bremse mit dem Getriebegehäuse gekoppelt, d.h. an diesem festlegbar, und andererseits über eine zweite Kupplung mit der Eingangswelle gekoppelt.

Der Begriff "verbunden" wird hier im Sinne einer festen, nicht schaltbaren Verbindung, die jedoch nicht schaltbare Übersetzungselemente enthalten kann, benutzt. Im Gegensatz dazu umfasst der Begriff "gekoppelt" im Rahmen der vorliegenden Beschreibung sowohl feste als auch schalt- oder variierbare Verbindungen. Ist konkret der letztere Fall gemeint, wird in der Regel das entsprechende Schaltelement, insbesondere eine Bremse oder eine Kupplung, explizit angegeben. Ist hingegen konkret der erstere Fall gemeint, wird in der Regel auf die Verwendung des Begriffs "gekoppelt" zugunsten des konkreteren Begriffs "verbunden" verzichtet. Die Verwendung des Begriffs "gekoppelt" ohne Angabe eines konkreten Schaltelementes deutet somit auf den beabsichtigten Einschluss beider Fälle hin. Diese Unterscheidung erfolgt allein zugunsten der besseren Verständlichkeit und insbesondere zur Verdeutlichung, wo das Vorsehen einer schalt- oder variierbaren Verbindung anstelle einer in der Regel leichter realisierbaren festen Verbindung zwingend erforderlich ist. Die obige Definition des Begriffs "verbunden" ist daher keinesfalls so eng auszulegen, dass willkürlich zu Umgehungszwecken eingefügte Kupplungen aus seinem Wortsinn herausführten.

Mit der bekannten Anordnung sind drei Betriebsmodi realisierbar, nämlich ein leistungsverzweigter Modus, ein seriellhybrider Modus und ein rein elektrischen Modus. Nachteilig ist, dass zwischen dem seriellhybriden und dem leistungsverzweigten Modus nur bei Getriebeübersetzung Null synchron geschaltet werden kann. Wird die Übersetzungsgrenze des leistungsverzweigten Modus bei ca. 1,5 erreicht, kann nicht unmittelbar in den seriellhybriden Modus umgeschaltet werden. Vielmehr muss erst die Verbrennungskraftmaschine abgestellt, in den seriellhybriden Modus gewechselt und dann die Verbrennungskraftmaschine neu gestartet werden. Aus dem leistungsverzweigten Modus kann bei eingeschalteter Verbrennungskraftmaschine nur mit schleifender Bremse und Kupplung in den seriellen Modus gewechselt werden, was den Wirkungsgrad des Getriebes reduziert.

Weiterhin ist aus der DE 10 2010 035 209 A1 eine Hybridantriebsanordnung mit zwei elektrischen Maschine, einer an eine Verbrennungskraftmaschine anschließbaren Eingangswelle und einer an einen Abtriebsstrang anschließbare Ausgangswelle bekannt, bei der Rotor der ersten elektrischen Maschine mit der Eingangswelle gekoppelt ist. Die Hybridantriebsanordnung umfasst einen ersten Planetensatz, dessen Sonne mit dem Rotor der zweiten elektrischen Maschine verbunden ist, dessen Steg mit der Ausgangswelle verbunden ist und dessen Hohlrad über eine erste Bremse mit dem Gehäuse gekoppelt ist und einen zweiten Planetensatz, dessen Sonne mit dem Rotor der zweiten elektrischen Maschine verbunden ist, dessen Steg mit der Eingangswelle verbunden ist und dessen Hohlrad mit der Ausgangswelle gekoppelt ist. Weiterhin ist ein dritter Planetenradsatz vorhanden, dessen Sonne mit dem Rotor der ersten elektrischen Maschine verbunden ist, dessen Steg mit der Eingangswelle verbunden ist und dessen Hohlrad mit dem Gehäuse und dem Rotor der zweiten elektrischen Maschine gekoppelt ist. Die Eingangswelle kann mittels einer Bremse an dem Gehäuse festgehalten werden. Es sind drei leistungsverzweigte Arbeitsmodi, zwei serielle Arbeitsmodi und vier mechanische Festgänge realisierbar. Diese Anordnung ist sehr komplex und deswegen für einfachere Fahrzeuge, die mit weniger Betriebsmodi ausgehen, vergeblich zu teuer.

Es ist die Aufgabe der Erfindung, bei hohem Wirkungsgrad des Getriebes einen harmonischen, drehzahlsynchronen Übergang zwischen unterschiedlichen Betriebsmodi zu ermöglichen.

Diese Aufgabe wird gelöst durch eine Hybridantriebsvorrichtung mit den Merkmalen von Anspruch 1, d.h. von einer Hybridantriebsanordnung für ein Kraftfahrzeug, umfassend
- eine erste und eine zweite elektrische Maschine, die jeweils einen Rotor und einen mit einem Getriebegehäuse fest verbundenen Stator aufweisen und sowohl im motorischen als auch im generatorischen Betrieb betreibbar sind und über eine Leistungselektronik miteinander verbindbar sowie an einen elektrischen Energiespeicher anschließbar sind,
- eine an eine Verbrennungskraftmaschine anschließbare Eingangswelle und eine an einen Abtriebsstrang anschließbare Ausgangswelle, wobei der Rotor (12) der ersten elektrischen Maschine (10) mit der Eingangswelle (1) gekoppelt ist,
- einen ersten Planetensatz, dessen Sonne mit dem Rotor der zweiten elektrischen Maschine verbunden ist, dessen Steg mit der Ausgangswelle gekoppelt ist und dessen Hohlrad einerseits über eine erste Bremse mit dem Gehäuse gekoppelt ist und andererseits mit der Eingangswelle gekoppelt ist, wobei entweder die Kopplung des Steges mit der Ausgangswelle oder die Kopplung des Hohlrades mit der Eingangswelle mittels einer ersten Kupplung schaltbar ist,
- einen zweiten Planetensatz, dessen Sonne mit dem Rotor der zweiten elektrischen Maschine verbunden ist, dessen Steg mit dem Gehäuse gekoppelt ist und dessen Hohlrad mit der Ausgangswelle gekoppelt ist, wobei entweder die Kopplung des Steges mit dem Gehäuse mittels einer zweiten Bremse oder die Kopplung des Hohlrades mit der Ausgangswelle mittels einer zweiten Kupplung schaltbar ist.

Bevorzugte Ausführungsformen sind Gegenstand der abhängigen Patentansprüche.

Das erfindungsgemäße Kopplungsschema beschreibt insgesamt vier kinematisch gleichwertige Basisvarianten. Bei Basisvariante 1 ist der Steg des ersten Planetensatzes über die erste Kupplung mit der Ausgangswelle gekoppelt, während das Hohlrad des ersten Planetensatzes ohne Schaltelement mit der Eingangswelle verbunden ist. Gleichzeitig ist der Steg des zweiten Planetensatzes über die zweite Bremse mit dem Gehäuse gekoppelt, während das Hohlrad des zweiten Planetensatzes ohne Schaltelement mit der Ausgangswelle verbunden ist.

Bei Basisvariante 2 ist der Steg des ersten Planetensatzes ohne Schaltelement mit der Ausgangswelle verbunden, während das Hohlrad des ersten Planetensatzes über die erste Kupplung mit der Eingangswelle gekoppelt ist. Der zweite Planetensatz hingegen ist wie der zweite Planetensatz der Basisvariante 1 verschaltet, d.h. sein Steg ist über die zweite Bremse mit dem Gehäuse gekoppelt, während sein Hohlrad ohne Schaltelement mit der Ausgangswelle verbunden ist.

Bei Basisvariante 3 ist der erste Planetensatz verschaltet wie bei Basisvariante 1, d.h. sein Steg ist über die erste Kupplung mit der Ausgangswelle gekoppelt, während sein Hohlrad ohne Schaltelement mit der Eingangswelle verbunden ist. Dagegen ist der Steg des zweiten Planetensatzes ohne Schaltelement mit dem Gehäuse verbunden, während das Hohlrad des zweiten Planetensatzes über eine zweite Kupplung mit der Ausgangswelle gekoppelt ist.

Bei Basisvariante 4 schließlich entspricht die Verschaltung des ersten Planetensatzes der Basisvariante 2 und die Verschaltung des zweiten Planetensatzes entspricht der Basisvariante 3. D.h. der Steg des ersten Planetensatzes ist ohne Schaltelement mit der Ausgangswelle verbunden, während das Hohlrad des ersten Planetensatzes über die erste Kupplung mit der Eingangswelle gekoppelt ist. Der Steg des zweiten Planetensatzes ist ohne Schaltelement mit dem Gehäuse verbunden, während das Hohlrad des zweiten Planetensatzes über die zweite Kupplung mit der Ausgangswelle verbunden ist.

Mit der Hybridantriebsanordnung gem. Basisvariante 1 lassen sich fünf Betriebsmodi realisieren, nämlich ein erster stufenloser Modus in seriellhybrider Betriebsart, ein Festgang in parallelhybrider Betriebsart, der bei herkömmlicher Getriebeauslegung einem zweiten Gang entsprechen würde, ein zweiter stufenloser Betriebsmodus in leistungsverzweigter Betriebsart und zwei rein elektrische Modi.

Der erste stufenlose Modus in seriellhybrider Betriebsart, der bevorzugt die Übersetzungen zwischen unendlich und ca. 2,3 abdeckt, ist realisiert bei geöffneter erster Bremse, geschlossener zweiter Bremse und geöffneter erster Kupplung. Die Verbrennungskraftmaschine treibt dabei im Wesentlichen allein die generatorisch betriebene erste elektrische Maschine an, deren erzeugte elektrische Leistung über die Leistungselektronik der zweiten elektrischen Maschine zugeführt wird, welche über den als reine Übersetzungsstufe wirkenden zweiten Planetensatz die Ausgangswelle antreibt. Das Sonnenrad des zweiten Planetensatzes läuft dabei aufgrund der Festlegung des Steges mit negativer Drehzahl um; bei der Grenzgetriebeübersetzung des seriellhybriden Modus von ca. 2,3 verschwinden jedoch die Relativdrehzahlen an der ersten Kupplung, sodass diese ohne Energieverlust geschlossen werden kann.

Damit ist der Übergang zu dem Festgang in parallelhybrider Betriebsart geschaffen, der bei geöffneter erster Bremse, geschlossener zweiter Bremse und geschlossener erster Kupplung realisiert ist.

Der zweite stufenlose Modus in leistungsverzweigter Betriebsart ist realisiert, wenn, ausgehend von dem Festgang, die zweite Bremse geöffnet wird, d.h. bei geöffneter erster und zweiter Bremse und geschlossener erster Kupplung. Hier wird die von der Verbrennungskraftmaschine aufgebrachte mechanische Leistung von der generatorisch betriebenen ersten elektrischen Maschine in elektrische Leistung umgewandelt, die der zweiten elektrischen Maschine zugeführt wird, sodass diese ein Gegenmoment der Sonne des ersten Planetensatzes erzeugen kann, sodass das um das Moment der ersten elektrischen Maschine verringerte Moment der Verbrennungskraftmaschinen am Hohlrad des ersten Planetensatzes abgestützt werden kann. Die um die von der ersten elektrischen Maschine aufgenommene Leistung verringerten Leistungen der Verbrennungskraftmaschine und der zweiten elektrischen Maschine fließen am ersten Planetensatz zusammen. In diesem leistungsverzweigten Modus können Getriebeübersetzungen bis zum Stillstand der Verbrennungskraftmaschine realisiert werden.

Stillstand der Verbrennungskraftmaschine entspricht dem Übergang in den ersten rein elektrischen Betriebsmodus, der durch Schließen der ersten Bremse, d.h. Festlegung der Eingangswelle, noch effizienter gestaltet werden kann, da die erste elektrische Maschine zur Erzeugung des Reaktionsmomentes am Hohlrad des ersten Planetensatzes nicht bestromt werden muss.

Der zweite rein elektrische Modus ist realisiert bei geschlossener erster und zweiter Bremse und geöffneter erster Kupplung. Im Gegensatz zum ersten rein elektrischen Modus steht hier im Wesentlichen allein der zweiten Planetensatz unter Last.

Bei Basisvariante 2 ist lediglich die Position der ersten Kupplung verlegt. Funktional und insbesondere hinsichtlich der Realisierung der unterschiedlichen Betriebsmodi kann jedoch vollumfänglich auf die obige Erläuterung zu Basisvariante 1 verwiesen werden.

Bei Basisvariante 3 wird die zweite Bremse durch die zweite Kupplung ersetzt. Soweit der Fachmann in der obigen Erläuterung "zweite Bremse" durch "zweite Kupplung" ersetzt, kann diese vollumfänglich auch für die Basisvariante 3 übernommen werden.

Gleiches gilt auch für Basisvariante 4.

Bei einer ersten Weiterbildung der Erfindung ist vorgesehen, dass die Kopplung der Eingangswelle mit dem Rotor der ersten elektrischen Maschine eine Übersetzungsstufe umfasst, die als ein dritter Planetensatz ausgebildet ist, dessen Sonne mit dem Rotor der ersten elektrischen Maschine verbunden ist, dessen Steg mit der Eingangswelle gekoppelt und dessen Hohlrad mit dem Gehäuse verbunden ist. Mit anderen Worten ist das Hohlrad des ersten Planetensatzes nicht direkt mit dem Rotor der ersten elektrischen Maschine verbunden (Basisvarianten 1 und 3) bzw. über die erste Kupplung gekoppelt (Basisvarianten 2 und 4), sondern indirekt über den dritten Planetensatz. Dabei ist das Hohlrad des ersten Planetensatzes direkt mit dem Steg des dritten Planetensatzes verbunden (Basisvarianten 1 und 3) bzw. über die erste Kupplung gekoppelt (Basisvarianten 2 und 4). Mittels des zusätzlichen Planetensatzes kann eine Drehmomentreduzierung der ersten elektrischen Maschine erreicht werden. Die schwächere Auslegung der ersten elektrischen Maschine kann vorteilhaft zu einer Reduzierung ihrer Länge genutzt werden, was trotz des Bauraummehraufwandes des dritten Planetensatzes insgesamt zu einer Bauraumreduzierung führen kann. Dies insbesondere wenn es gelingt, den dritten Planetensatz radial innerhalb des Rotors der ersten elektrischen Maschine zu platzieren.

Bzgl. der realisierbaren Betriebsmodi und der für ihre Realisierung erforderlich Schaltstellungen der Schaltelemente ergibt sich gegenüber den reinen Basisvarianten keine Änderung. Insofern kann auf die obige Erläuterung verwiesen werden.

Bei einer zweiten Weiterbildung der Erfindung ist vorgesehen, dass der Rotor der zweiten elektrischen Maschine über eine dritte Bremse mit dem Gehäuse gekoppelt ist. Hierdurch wird ein zusätzlicher Festgang in parallelhybrider Betriebsart geschaffen, der bei herkömmlicher Getriebeübersetzung einem dritten Gang entsprechen würde. Der zusätzliche Festgang ist bei Basisvariante 1 und 2 realisiert. Bei geöffneter erster und zweiter Bremse, geschlossener dritter Bremse und geschlossener dritter Kupplung. Damit wird die Sonne des ersten Planetensatzes am Gehäuse festgelegt, sodass der erste Planetensatz als reine Übersetzungsstufe für ein aus der Verbrennungskraftmaschine und der ersten elektrischen Maschine zusammengesetztes Moment wirkt. Bei Basisvariante 3 und 4 muss statt der zweiten Bremse die zweite Kupplung geöffnet sein, um den zusätzlichen Festgang zu realisieren. Auch hier wirkt der erste Planetensatz aufgrund seiner mittels der dritten Bremse festgelegten Sonne als reine Übersetzungsstufe für ein aus Verbrennungskraftmaschine und erster elektrischer Maschine zusammengesetztes Moment.

Bei einer dritten Weiterbildung der Erfindung gem. Basisvarianten 1 und 2 ist vorgesehen, dass der Steg des zweiten Planetensatzes einerseits über die zweite Bremse mit dem Gehäuse und andererseits über eine dritte Kupplung mit dessen Hohlrad gekoppelt ist. Mit anderen Worten wird bei den Basisvarianten 1 und 2 die Möglichkeit der Verblockung des zweiten Planetensatzes durch Kurzschluss von dessen Steg und dessen Hohlrad mittels der dritten Kupplung vorgeschlagen. Hierdurch ergeben sich ein zusätzlicher Festgang in parallelhybrider Betriebsart, der einem vierten Gang bei herkömmlicher Getriebeübersetzung entsprechen würde sowie ein dritter, rein elektrischer Betrieb. Der zusätzliche Festgang wird realisiert bei geöffneter erster und zweiter Bremse und geschlossener erster und dritter Kupplung. Der zusätzliche rein elektrische Modus kann hieraus durch Öffnen der ersten Kupplung realisiert werden.

Auch für die Basisvarianten 3 und 4 ist diese Wirkung im Grunde realisierbar. Hierzu ist vorgesehen, dass das Hohlrad des zweiten Planetensatzes über die zweite Kupplung mit der Ausgangswelle gekoppelt ist und dessen Sonne über die dritte Kupplung mit der Ausgangswelle gekoppelt ist. Bezüglich der Funktionalität kann auf die obige Erläuterung zu Basisvarianten 1 und 2 verwiesen werden, wobei jede Bezugnahme auf die zweite Bremse durch eine Bezugnahme auf die zweite Kupplung zu ersetzen ist.

Bei einer vierten Weiterbildung der Erfindung schließlich ist vorgesehen, dass ein eingangsseitiger Abschnitt der Eingangswelle mittels einer vierten Kupplung von sämtlichen übrigen Elementen der Hybridantriebsanordnung trennbar ist. Mit anderen Worten wird die Einführung einer Eingangswellenhauptkupplung vorgeschlagen, die eine Abkopplung der Verbrennungskraftmaschine von der gesamten Hybridantriebsanordnung erlaubt. Hieraus ergibt sich ein zusätzlicher rein elektrischer Modus in drehzahladdierender Betriebsart. Bei dieser Weiterbildung muss die vierte Kupplung zur Erzielung der oben bereits erläuterten Betriebsmodi der Basisvarianten geschlossen sein. Zur Realisierung des drehzahladdierenden rein elektrischen Modus werden bis auf die erste Kupplung sämtliche Schaltelemente einschließlich der vierten Kupplung geöffnet. Auf diese Weise addieren sich die Drehzahlen der ersten und zweiten elektrischen Maschine am ersten Planetensatz. Alle anderen Elemente der Antriebsanordnung sind inaktiv.

Sämtliche vorgenannten Weiterbildungen der Basisvarianten sind einzeln oder in Kombination miteinander realisierbar. Bzgl. der einzelnen Betriebsmodi kann auf die obige Erläuterung verwiesen werden.

Weitere Merkmale und Vorteile der Erfindung ergeben sich aus der nachfolgenden, speziellen Beschreibung und den Zeichnungen.

Es zeigen:
- Figur 1: eine Ausführungsform einer ersten Basisvariante der erfindungsgemäßen Hybridantriebsanordnung,
- Figur 2: eine Ausführungsform einer zweiten Basisvariante der erfindungsgemäßen Hybridantriebsanordnung,
- Figur 3: eine Ausführungsform einer dritten Basisvariante der erfindungsgemäßen Hybridantriebsanordnung,
- Figur 4: eine Ausführungsform einer vierten Basisvariante der erfindungsgemäßen Hybridantriebsanordnung,
- Figur 5: eine erste Weiterbildung der Hybridantriebsanordnung von Figur 1,
- Figur 6: eine erste Weiterbildung der Hybridantriebsanordnung von Figur 2,
- Figur 7: eine erste Weiterbildung der Hybridantriebsanordnung von Figur 3,
- Figur 8: eine erste Weiterbildung der Hybridantriebsanordnung von Figur 4,
- Figur 9: eine zweite Weiterbildung der Hybridantriebsanordnung von Figur 1,
- Figur 10: eine zweite Weiterbildung der Hybridantriebsanordnung von Figur 2,
- Figur 11: eine zweite Weiterbildung der Hybridantriebsanordnung von Figur 3,
- Figur 12: eine zweite Weiterbildung der Hybridantriebsanordnung von Figur 4,
- Figur 13: eine dritte Weiterbildung der Hybridantriebsanordnung von Figur 1,
- Figur 14: eine dritte Weiterbildung der Hybridantriebsanordnung von Figur 2,
- Figur 15: eine dritte Weiterbildung der Hybridantriebsanordnung von Figur 3,
- Figur 16: eine dritte Weiterbildung der Hybridantriebsanordnung von Figur 4,
- Figur 17: eine vierte Weiterbildung der Hybridantriebsanordnung von Figur 1,
- Figur 18: eine vierte Weiterbildung der Hybridantriebsanordnung von Figur 2,
- Figur 19: eine vierte Weiterbildung der Hybridantriebsanordnung von Figur 3,
- Figur 20: eine vierte Weiterbildung der Hybridantriebsanordnung von Figur 4.

Gleiche Bezugszeichen in den Figuren deuten auf gleiche oder analoge Bauteile hin.

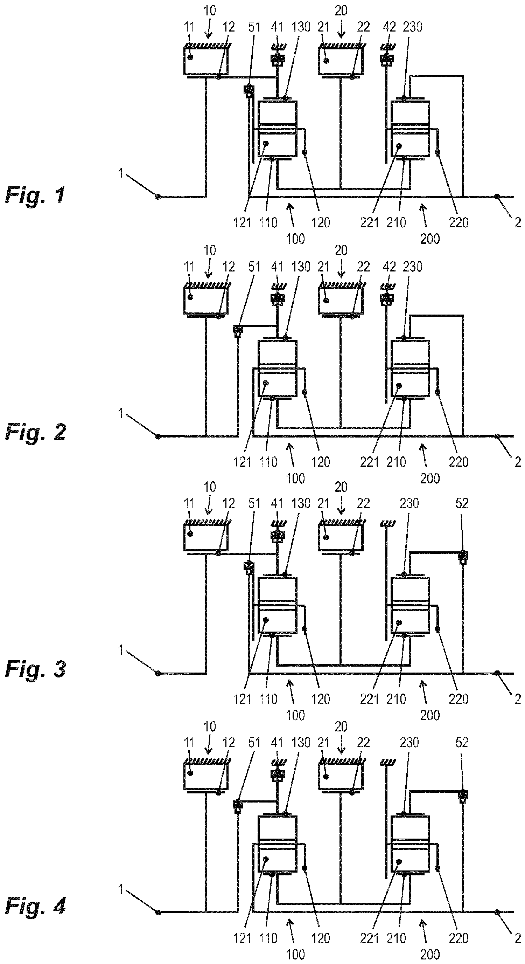

Figur 1 zeigt eine Ausführungsform der Erfindung gem. Basisvariante 1. Die Basisvariante 1 definiert sich durch die im allgemeinen Teil der Beschreibung dargestellten, funktionalen Verschaltungen der einzelnen Elemente und nicht durch deren in Figur 1 dargestellte räumlichgeometrische Anordnung. Insbesondere können einzelne Elemente oder Elementengruppen je nach den Platz- und Geometrieerfordernissen des Einzelfalls, etwa zur Anpassung an Längs- oder Quereinbau, Vorderrad-, Hinterrad- oder Vierradantrieb umgeordnet werden. Analoges gilt für sämtliche hier dargestellten Ausführungsformen.

Die Hybridantriebsanordnung gem. Figur 1 weist eine Eingangswelle 1 auf, die mit einem nicht dargestellten Verbrennungsmotor verbindbar bzw. in Montageendzustand im Kraftfahrzeug verbunden ist. Eine Ausgangswelle 2 ist mit einem Abtrieb verbindbar bzw. in Montageendstellung im Kraftfahrzeug verbunden. Der Abtrieb umfasst typischerweise ein Differential sowie wenigstens eine angetriebene Achse, kann jedoch auch weitere Komponenten, beispielsweise zusätzliche Übersetzungsstufen umfassen. Weiter weist die Antriebsanordnung eine erste elektrische Maschine 10 mit einem gehäusefesten Stator 11 und einem drehbeweglichen Rotor 12 auf. Die erste elektrische Maschine 10 ist sowohl motorisch als auch generatorisch betreibbar. Weiter weist die Hybridantriebsanordnung eine zweite elektrische Maschine mit einem gehäusefesten Stator und einem drehbeweglichen Rotor 22 auf. Auch die zweite elektrische Maschine 20 ist sowohl motorisch als auch generatorisch betreibbar. Beide elektrischen Maschinen 10, 20 sind über eine nicht dargestellte Leistungselektronik miteinander sowie mit wenigstens einem elektrischen Energiespeicher, insbesondere einem Akkumulator, verbindbar bzw. in Montageendstellung im Kraftfahrzeug verbunden. Weiter umfasst die Antriebsanordnung gem. Figur 1 einen ersten Planetensatz 100 mit einer Sonne 110, einem Steg 120, auf welchem wenigstens ein Satz Planetenräder 121 angeordnet sind sowie mit einem Hohlrad 30. Die Planeten 121 kämmen einerseits mit der Sonne 110 und andererseits mit dem Hohlrad 130. Weiter umfasst die Hybridantriebsanordnung gem. Figur 1 einen zweiten Planetensatz mit einer Sonne 210, einem Steg 220, auf welchem ein Satz Planetenräder 221 gelagert ist, sowie mit einem Hohlrad 230. Die Planeten 221 kämmen einerseits mit der Sonne 210 und andererseits mit dem Hohlrad 230. Dieser grundsätzliche Aufbau ist bei allen gezeigten Ausführungsformen verwirklicht und soll bei der Beschreibung der weiteren Figuren nicht noch einmal explizit wiederholt werden.

Bei der Ausführungsform gem. Figur 1 ist das Hohlrad 130 des ersten Planetensatzes 100 über eine erste Bremse 41 mit dem Gehäuse gekoppelt, d.h. an diesem festlegbar. Zudem ist das Hohlrad 130 des ersten Planetensatzes fest mit dem Rotor 12 der ersten elektrischen Maschine 10 verbunden, der seinerseits fest mit der Eingangswelle 1 verbunden ist. Der Steg 120 des ersten Planetensatzes 100 ist über eine erste Kupplung 51 schaltbar mit der Ausgangswelle 2 gekoppelt. Die Sonne 110 des ersten Planetensatzes 100 ist fest mit dem Rotor 22 der zweiten elektrischen Maschine 20 verbunden. Zudem ist es fest mit der Sonne 210 des zweiten Planetensatzes 200 verbunden. Dessen Steg 220 ist über eine zweite Bremse 42 mit dem Gehäuse gekoppelt, d.h. an diesem festlegbar. Sein Hohlrad 230 ist fest mit der Ausgangswelle 2 verbunden. Bzgl. der Funktionalität der gezeigten Hybridantriebsanordnung und der damit realisierbaren Betriebsmodi wird auf den obigen, allgemeinen Teil der Beschreibung verwiesen.

Die in Figur 2 gezeigte Basisvariante 2 der Erfindung ist der Basisvariante 1 kinematisch äquivalent, und weist insbesondere als Schaltelemente ebenfalls eine erste Bremse 41 und eine zweite Bremse 42 sowie eine erste Kupplung 51 auf. Im Unterschied zu Basisvariante 1 koppelt die erste Kupplung 51 jedoch das Hohlrad 130 des ersten Planetensatzes 100, welches hier nicht fest mit dem Rotor 12 der ersten elektrischen Maschine 10 verbunden ist, mit der Eingangswelle 1. Dies entspricht gleichzeitig einer Kopplung des Hohlrades 130 mit dem Rotor 12, der fest mit der Eingangswelle 1 verbunden ist. Dafür ist der Steg 120 des ersten Planetensatzes fest mit der Ausgangswelle 2 verbunden.

Auch die in Figur 3 gezeigte Basisvariante 3 ist den Basisvarianten 1 und 2 kinematisch äquivalent. Im Unterschied zu diesen weist sie als Schaltelemente ebenfalls die erste Bremse 41 und die erste Kupplung 51, anstelle der zweiten Bremse 42 jedoch die zweite Kupplung 52 auf. Diese koppelt das Hohlrad 230 des zweiten Planetensatzes 200 schaltbar mit der Ausgangswelle 2. Dafür ist der Steg 220 des zweiten Planetensatzes 200 am Gehäuse festgelegt. Im Übrigen entspricht die Basisvariante 3 gem. Figur 3 der Basisvariante 1 gem. Figur 1.

Auch Basisvariante 4 ist den Basisvarianten 1, 2 und 3 kinematisch äquivalent. Wie auch die Basisvariante 3 weist sie als Schaltelemente die erste Bremse 41, die erste Kupplung 51 und die zweite Kupplung 52 auf. Wie bei den zuletzt beschriebenen Basisvarianten 3 koppelt die zweite Kupplung 52 das Hohlrad 230 des zweiten Planetensatzes 200 schaltbar mit der Ausgangswelle 2. Die erste Kupplung hingegen koppelt, wie bei Basisvariante 2, das Hohlrad 130 des ersten Planetensatzes 100 mit der Eingangswelle 1. Im Übrigen entspricht die Basisvariante 4 hinsichtlich der Kopplungen am ersten Planetensatz 100 der Basisvariante 2 bzw. hinsichtlich der Kopplungen am zweiten Planetensatz 200 der Basisvariante 3.

Die nachfolgenden Weiterbildungen sollen für jede Basisvariante lediglich im Unterschied zu der entsprechenden Figur der zuvor beschriebenen Basisvarianten 1 bis 4 diskutiert werden. Sämtliche zu einer Basisvariante beschriebenen Weiterbildungen lassen sich beliebig miteinander kombinieren, sodass sich bei der jeweils resultierenden Hybridantriebsanordnung die im obigen, allgemeinen Teil der Beschreibung diskutierten Funktionalitäten und Betriebsmodi summieren.

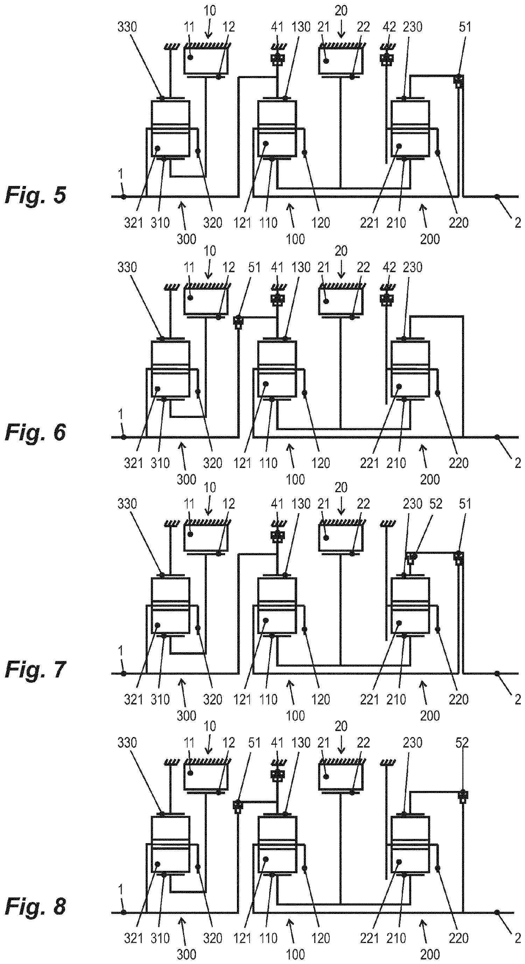

Die in den Figuren 5 bis 8 gezeigte, erste Erweiterung zeichnet sich durch die besondere Ankopplung der ersten elektrischen Maschine 10 mittels eines zusätzlichen, dritten Planetensatzes 300 aus. Dieser weist eine Sonne 310 und einen Steg 320 auf, auf dem ein Satz Planetenräder 321 gelagert ist. Zudem weist der dritte Planetensatz 300 ein Hohlrad 330 auf. Die Planetenräder 321 kämmen einerseits mit der Sonne 310 und andererseits mit dem Hohlrad 330. Die Ankopplung des dritten Planetensatzes 300 erfolgt bei allen Basisvarianten, wie in den Figuren 5 bis 8 dargestellt, auf gleiche Weise. So ist die Sonne 310 fest mit dem Rotor 12 der ersten elektrischen Maschine verbunden. Sein Steg 320 ist fest der Eingangswelle 1 verbunden. Sein Hohlrad 330 ist am Gehäuse festgelegt, sodass der dritte Planetensatz 300 stets nur als einfache Übersetzungsstufe wirkt. Man beachte, dass bei den in Figur 5 und Figur 7 dargestellten ersten Weiterbildungen der ersten bzw. dritten Basisvariante die Direktverbindung zwischen dem Hohlrad 130 des ersten Planetensatzes 100 und dem Rotor 12 der ersten elektrischen Maschine aufgehoben ist. Stattdessen erfolgt die Verbindung auf dem "Umweg" über die Eingangswelle 1 und den dritten Planetensatz. Auch dies stellt eine "Verbindung" im eingangs definierten Sinn dar, da keine Schaltelemente dazwischen liegen.

Weiter sei darauf hingewiesen, dass die erste Kupplung 51 bei den Ausführungsformen der Figuren 5 und 7 ihre axiale Position gegenüber den Ausführungsformen der Figuren 1 bzw. 3 verändert hat. Die Funktionalität, nämlich die Kopplung zwischen dem Steg 120 des ersten Planetensatzes und der Ausgangswelle 2, ist jedoch unverändert bestehen geblieben. Die axiale Verschiebung der ersten Kupplung 51 erfolgte aus Gründen der Bauraumoptimierung und stellt ein Beispiel für die oben angesprochene Freiheit des Fachmanns bei der konkreten Anordnung der einzelnen Elemente der erfindungsgemäßen Hybridantriebsanordnung dar. Bzgl. der Funktionalität und der realisierbaren Betriebsmodi wird auf den obigen, allgemeinen Teil der Beschreibung verwiesen.

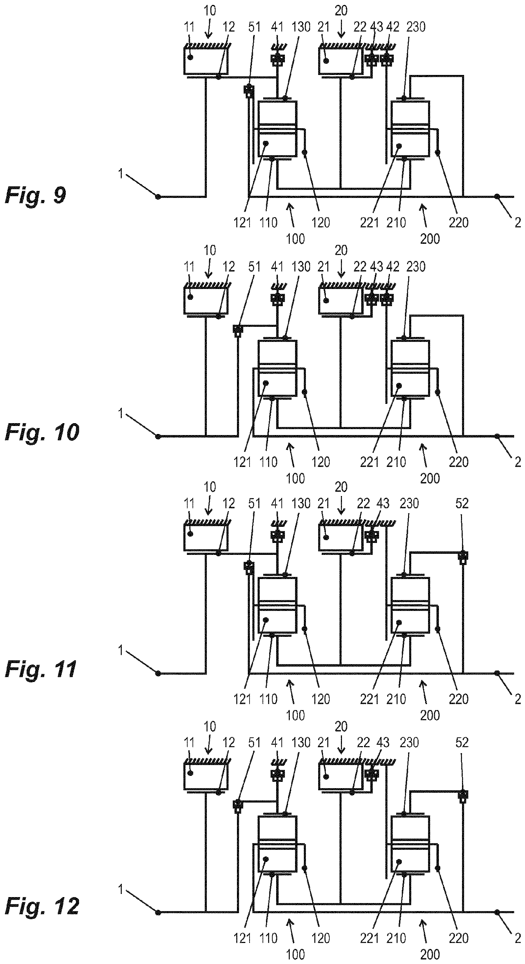

Die Figuren 9 bis 12 zeigen jeweils eine zweite Weiterbildung der Basisvarianten 1, 2, 3 bzw. 4 gem. den Figuren 1, 2, 3 bzw. 4. Die zweite Weiterbildung besteht in der Aufnahme einer zusätzlichen Bremse, nämlich der dritten Bremse 43, mit der der Rotor 22 der zweiten elektrischen Maschine 20 mit dem Gehäuse gekoppelt, d.h. an diesem festlegbar ist. Davon abgesehen unterscheiden sich die Ausführungsformen der Figuren 9 bis 12 nicht von den Ausführungsformen der Figuren 1 bis 4. Bzgl. der Funktionalität und der realisierbaren Betriebsmodi wird auf den obigen, allgemeinen Teil der Beschreibung verwiesen.

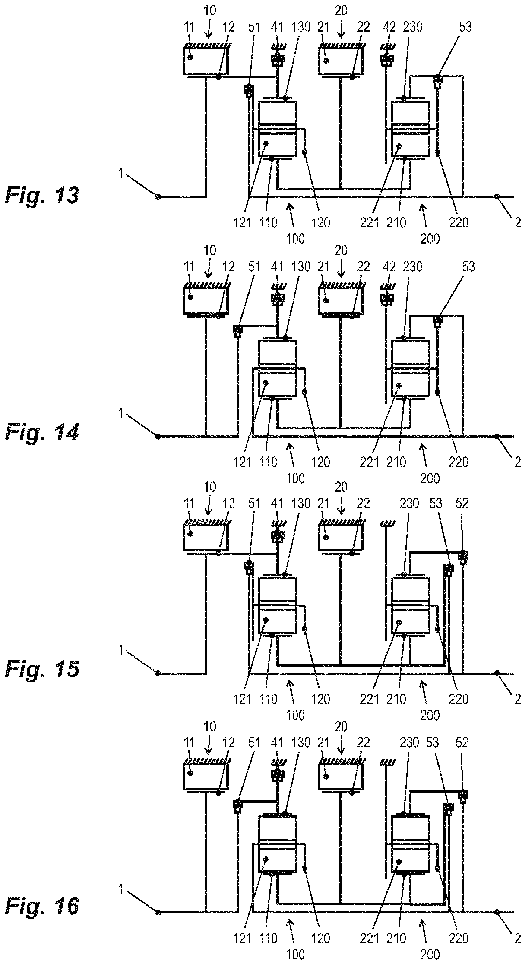

Die Figuren 13 bis 16 zeigen eine dritte Weiterbildung der ersten, zweiten, dritten bzw. vierten Basisvariante gem. den Figuren 1, 2, 3 bzw. 4. Die dritte Weiterbildung besteht in der Aufnahme der Möglichkeit, zwei Wellen des zweiten Planetensatzes 200, insbesondere dessen Hohlrad 230 und eine weitere Welle miteinander kurz zu schließen, um den zweiten Planetensatz 200 insgesamt zu verblocken, sodass er ohne innere Reibung als Block umläuft. Hierzu ist eine dritte Kupplung 53 vorgesehen. Bei den Basisvarianten 1 und 2 gem. den Figuren 13 und 14 koppelt die dritte Kupplung 53 unmittelbar den Steg 220 des zweiten Planetensatzes 200 mit dessen Hohlrad 230. Bei Basisvarianten 3 und 4 hingegen koppelt die dritte Kupplung 53 jeweils die Sonne 210 des zweiten Planetensatzes 200 mit der Ausgangswelle 2. Dies ist aufgrund der Festlegung des Steges 220 am Gehäuse bei diesen Ausführungsformen der Verblockung kinematisch äquivalent. Bzgl. der Funktionalitäten und realisierbaren Betriebsmodi wird auf den obigen, allgemeinen Teil der Beschreibung verwiesen.

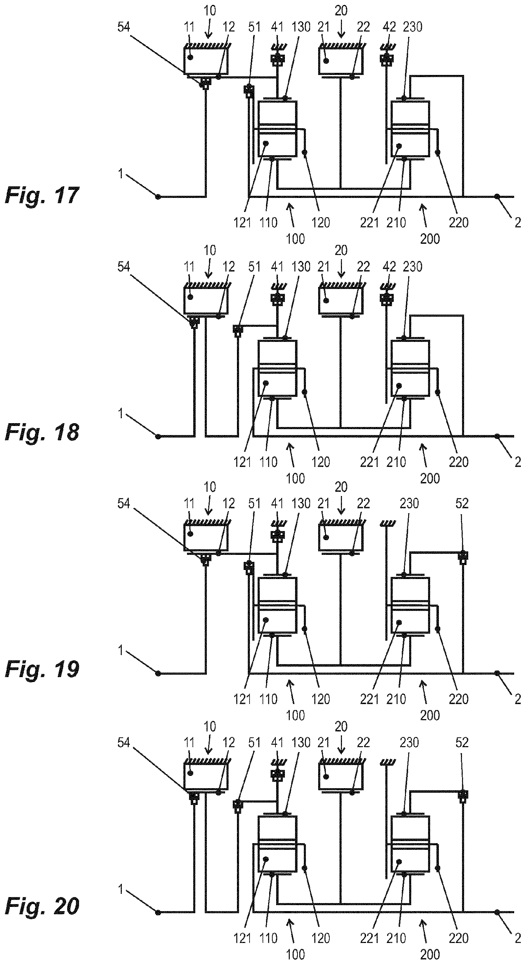

Die Figuren 17 bis 20 zeigen eine vierte Weiterbildung der Basisvarianten 1, 2, 3 bzw. 4 gem. den Figuren 1, 2, 3 bzw. 4. Die Idee der vierten Weiterbildung besteht darin, die Eingangswelle 1 in zwei Abschnitte zu unterteilen, deren eingangsseitiger Abschnitt mit der Verbrennungskraftmaschine gekoppelt bzw. koppelbar ist und von dem zweiten, sich anschließenden Abschnitt mittels einer vierten Kupplung 54, nämlich einer Eingangswellenhauptkupplung trennbar ist. Bei den Ausführungsformen der Figuren 17 und 19, d.h. bei der vierten Weiterbildung der ersten und dritten Basisvariante ist der zweite Eingangswellenabschnitt vollständig mit dem Rotor 12 der ersten elektrischen Maschine verschmolzen. Bei den Ausführungsformen 18 und 20 ist der erste Abschnitt der Eingangswelle 1 links der vierten Kupplung 54 deutlich unterscheidbar von dem zweiten, den Rotor 12 der ersten elektrischen Maschine 10 tragenden Eingangswellenabschnitt, der an der ersten Kupplung 51 endet. Der Fachmann wird erkennen, dass all das, was zuvor im Zusammenhang mit der ersten bis dritten Weiterbildung zur Ankopplung der Eingangswelle 1 gesagt wurde, bei Kombinationen einer oder mehrerer dieser Weiterbildungen mit der vierten Weiterbildung jeweils auf den zweiten Eingangswellenabschnitt zu beziehen ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere steht dem Fachmann die Umgruppierung einzelner Elemente oder Elementengruppen zur Anpassung an räumliche, geometrische und übersetzungstechnische Anforderungen des Einzelfalls bei Beibehaltung der funktionalen Verschaltung der Elemente frei. Anstelle des dritten Planetensatzes 300 können auch andere Übersetzungselemente, die eine Verringerung des Momentes der ersten elektrischen Maschine zur Folge haben, zur Anwendung kommen.

### Bezugszeichenliste

- 11: Stator von 10
- 12: Rotor von 10
- 20: zweite elektrische Maschine
- 21: Stator von 20
- 22: Rotor von 20
- 41: erste Bremse
- 42: zweite Bremse
- 51: erste Kupplung
- 52: zweite Kupplung
- 53: dritte Kupplung
- 54: vierte Kupplung
- 100: erster Planetensatz
- 110: Sonne von 100
- 120: Steg von 100
- 121: Planeten auf 120
- 130: Hohlrad von 100
- 200: zweiter Planetensatz
- 210: Sonne von 200
- 220: Steg von 200
- 221: Planeten auf 220
- 230: Hohlrad von 200
- 300: dritter Planetensatz
- 310: Sonne von 300
- 320: Steg von 300
- 321: Planeten auf 320
- 330: Hohlrad von 300

## Patentansprüche

1. Hybridantriebsanordnung für ein Kraftfahrzeug, umfassend
- eine erste und eine zweite elektrische Maschine (10, 20), die jeweils einen Rotor (12, 22) und einen mit einem Getriebegehäuse fest verbundenen Stator (11, 21) aufweisen und sowohl im motorischen als auch im generatorischen Betrieb betreibbar sind und über eine Leistungselektronik miteinander verbindbar sowie an einen elektrischen Energiespeicher anschließbar sind,
- eine an eine Verbrennungskraftmaschine anschließbare Eingangswelle (1) und eine an einen Abtriebsstrang anschließbare Ausgangswelle (2), wobei der Rotor (12) der ersten elektrischen Maschine (10) mit der Eingangswelle (1) gekoppelt ist,
- einen ersten Planetensatz (100), dessen Sonne (100) mit dem Rotor (22) der zweiten elektrischen Maschine (20) verbunden ist, dessen Steg (120) mit der Ausgangswelle (2) gekoppelt ist und dessen Hohlrad einerseits über eine erste Bremse (41) mit dem Gehäuse gekoppelt ist und andererseits mit der Eingangswelle (1) gekoppelt ist, wobei entweder die Kopplung des Steges (120) des ersten Planetensatzes (100) mit der Ausgangswelle (2) oder die Kopplung des Hohlrades (130) des ersten Planetensatzes (100) mit der Eingangswelle (1) mittels einer ersten Kupplung (51) schaltbar ist,
- einen zweiten Planetensatz (200), dessen Sonne (210) mit dem Rotor (22) der zweiten elektrischen Maschine (20) verbunden ist, dessen Steg (220) mit dem Gehäuse gekoppelt ist und dessen Hohlrad (230) mit der Ausgangswelle (2) gekoppelt ist, wobei entweder die Kopplung des Steges (220) des zweiten Planetensatzes (200) mit dem Gehäuse mittels einer zweiten Bremse (42) oder die Kopplung des Hohlrades (230) des zweiten Planetensatzes (200) mit der Ausgangswelle (2) mittels einer zweiten Kupplung (52) schaltbar ist.

2. Hybridantriebsanordnung nach Anspruch 1,
**dadurch gekennzeichnet,**
**dass** die Kopplung der Eingangswelle (1) mit dem Rotor (12) der ersten elektrischen Maschine (10) eine Übersetzungsstufe umfasst, die als ein dritter Planetensatz (300) ausgebildet ist, dessen Sonne (310) mit dem Rotor (12) der ersten elektrischen Maschine (10) verbunden ist, dessen Steg (320) mit der Eingangswelle (1) gekoppelt ist und dessen Hohlrad (330) mit dem Gehäuse verbunden ist.

3. Hybridantriebsanordnung nach einem der vorangehenden Ansprüche,
**dadurch gekennzeichnet,**
**dass** der Rotor (22) der zweiten elektrischen Maschine (20) über eine dritte Bremse (43) mit dem Gehäuse gekoppelt ist.

4. Hybridantriebsanordnung nach einem der vorangehenden Ansprüche,
**dadurch gekennzeichnet,**
**dass** das Hohlrad (230) des zweiten Planetensatzes (200) mit der Ausgangswelle (2) verbunden ist und dass der Steg (220) des zweiten Planetensatzes (200) einerseits über die zweite Bremse (42) mit dem Gehäuse und andererseits über eine dritte Kupplung (53) mit dessen Hohlrad (230) gekoppelt ist.

5. Hybridantriebsanordnung nach einem der Ansprüche 1 bis 3,
**dadurch gekennzeichnet,**
**dass** der Steg (220) des zweiten Planetensatzes (200) mit dem Gehäuse verbunden ist und dass das Hohlrad (230) des zweiten Planetensatzes (200) über die zweite Kupplung (52) mit der Ausgangswelle (2) gekoppelt ist und dessen Sonne (210) über eine dritte Kupplung (53) mit der Ausgangswelle (2) gekoppelt ist.

6. Hybridantriebsanordnung nach einem der vorangehenden Ansprüche,
**dadurch gekennzeichnet,**
**dass** ein eingangsseitiger Abschnitt der Eingangswelle (1) mittels einer vierten Kupplung (54) von sämtlichen übrigen Elementen der Hybridantriebsanordnung trennbar ist.

## Claims

1. Hybrid drive arrangement for a motor vehicle, comprising
- a first and a second electric machine (10, 20) which in each case have a rotor (12, 22) and a stator (11, 21), which is connected fixedly to a transmission housing, and can be operated both in motor and in generator operation and can be linked to one another via an electronic power system and can be connected to an electric energy store,
- an input shaft (1) which can be connected to an internal combustion engine and an output shaft (2) which can be connected to a drivetrain output section, the rotor (12) of the first electric machine (10) being coupled to the input shaft (1),
- a first planetary set (100), the sun (100) of which is connected to the rotor (22) of the second electric machine (20), the spider (120) of which is coupled to the output shaft (2), and the internal gear of which is coupled firstly via a first brake (41) to the housing and is coupled secondly to the input shaft (1), it being possible for either the coupling of the spider (120) of the first planetary set (100) to the output shaft (2) or the coupling of the internal gear (130) of the first planetary set (100) to the input shaft (1) to be switched by means of a first clutch (51),
- a second planetary set (200), the sun (210) of which is connected to the rotor (22) of the second electric machine (20), the spider (220) of which is coupled to the housing, and the internal gear (230) of which is coupled to the output shaft (2), it being possible for either the coupling of the spider (220) of the second planetary set (200) to the housing to be switched by means of a second brake (42) or the coupling of the internal gear (230) of the second planetary set (200) to the output shaft (2) to be switched by means of a second clutch (52).

2. Hybrid drive arrangement according to Claim 1, **characterized in that** the coupling of the input shaft (1) to the rotor (12) of the first electric machine (10) comprises a transmission stage which is configured as a third planetary set (300), the sun (310) of which is connected to the rotor (12) of the first electric machine (10), the spider (320) of which is coupled to the input shaft (1), and the internal gear (330) of which is connected to the housing.

3. Hybrid drive arrangement according to either of the preceding claims, **characterized in that** the rotor (22) of the second electric machine (20) is coupled via a third brake (43) to the housing.

4. Hybrid drive arrangement according to one of the preceding claims, **characterized in that** the internal gear (230) of the second planetary set (200) is connected to the output shaft (2), and **in that** the spider (220) of the second planetary set (200) is coupled firstly via the second brake (42) to the housing and secondly via a third clutch (53) to its internal gear (230).

5. Hybrid drive arrangement according to one of Claims 1 to 3, **characterized in that** the spider (220) of the second planetary set (200) is connected to the housing, and **in that** the internal gear (230) of the second planetary set (200) is coupled via the second clutch (52) to the output shaft (2) and its sun (210) is coupled via a third clutch (53) to the output shaft (2).

6. Hybrid drive arrangement according to one of the preceding claims, **characterized in that** an input-side section of the input shaft (1) can be disconnected by means of a fourth clutch (54) from all remaining elements of the hybrid drive arrangement.

## Revendications

1. Système d'entraînement hybride pour un véhicule automobile, comprenant
- une première et une deuxième machine électrique (10, 20) qui présentent à chaque fois un rotor (12, 22) et un stator (11, 21) connecté fixement à un boîtier de transmission et qui peuvent être entraînées à la fois en mode moteur et en mode générateur et qui peuvent être connectées l'une à l'autre par le biais d'une électronique de puissance et qui peuvent être raccordées à un accumulateur d'énergie électrique,
- un arbre d'entrée (1) pouvant être raccordé à un moteur à combustion interne et un arbre de sortie (2) pouvant être raccordé à une chaîne de prise de force, le rotor (12) de la première machine électrique (10) étant accouplé à l'arbre d'entrée (1),
- un premier train planétaire (100), dont la roue solaire (100) est connectée au rotor (22) de la deuxième machine électrique (20) dont le porte-satellites (120) est accouplé à l'arbre de sortie (2) et dont la couronne dentée est accouplée d'une part par le biais d'un premier frein (41) au boîtier et d'autre part est accouplée à l'arbre d'entrée (1), soit l'accouplement du porte-satellites (120) du premier train planétaire (100) à l'arbre de sortie (2) soit l'accouplement de la couronne dentée (130) du premier train planétaire (100) à l'arbre d'entrée (1) pouvant être commuté au moyen d'un premier embrayage (51),
- un deuxième train planétaire (200) dont la roue solaire (210) est connectée au rotor (22) de la deuxième machine électrique (20), dont le porte-satellites (220) est accouplé au boîtier et dont la couronne dentée (230) est accouplée à l'arbre de sortie (2), soit l'accouplement du porte-satellites (220) du deuxième train planétaire (200) au boîtier pouvant être commuté au moyen d'un deuxième frein (42) soit l'accouplement de la couronne dentée (230) du deuxième train planétaire (200) à l'arbre de sortie (2) pouvant être commuté au moyen d'un deuxième embrayage (52).

2. Système d'entraînement hybride selon la revendication 1,
**caractérisé en ce que**
l'accouplement de l'arbre d'entrée (1) au rotor (12) de la première machine électrique (10) comprend un étage de démultiplication qui est réalisé sous forme de troisième train planétaire (300), dont la roue solaire (310) est connectée au rotor (12) de la première machine électrique (10), dont le porte-satellites (320) est accouplé à l'arbre d'entrée (1) et dont la couronne dentée (330) est connectée au boîtier.

3. Système d'entraînement hybride selon l'une quelconque des revendications précédentes,
**caractérisé en ce que**
le rotor (22) de la deuxième machine électrique (20) est accouplé au boîtier par le biais d'un troisième frein (43).

4. Système d'entraînement hybride selon l'une quelconque des revendications précédentes,
**caractérisé en ce que**
la couronne dentée (230) du deuxième train planétaire (200) est connectée à l'arbre de sortie (2) et **en ce que** le porte-satellites (220) du deuxième train planétaire (200) est accouplé d'une part par le biais du deuxième frein (42) au boîtier et d'autre part par le biais d'un troisième embrayage (53) à sa couronne dentée (230).

5. Système d'entraînement hybride selon l'une quelconque des revendications 1 à 3,
**caractérisé en ce que**
le porte-satellites (220) du deuxième train planétaire (200) est connecté au boîtier et **en ce que** la couronne dentée (230) du deuxième train planétaire (200) est accouplée par le biais du deuxième embrayage (52) à l'arbre de sortie (2) et dont la roue solaire (210) est accouplée par le biais d'un troisième embrayage (53) à l'arbre de sortie (2).

6. Système d'entraînement hybride selon l'une quelconque des revendications précédentes,
**caractérisé en ce**
**qu'**une portion du côté de l'entrée de l'arbre d'entrée (1) peut être séparée de tous les autres éléments du système d'entraînement hybride au moyen d'un quatrième embrayage (54).
